# EUROPÄISCHE PATENTSCHRIFT

(11) **EP 1 557 593 B1**
(45) Veröffentlichungstag und Bekanntmachung des Hinweises auf die Patenterteilung: **18.04.2007**
(21) Anmeldenummer: 04024711.6
(22) Anmeldetag: 16.10.2004
(51) Int. Cl.: F16H 63/30

(54) **Schaltvorrichtung für Geschwindigkeits-Wechselgetriebe**
Shift control for change speed gear transmission
Commande de changement de vitesse pour transmission à plusieurs rapports pour véhicules

(30) Priorität: 23.01.2004 DE 102004003503
(43) Veröffentlichungstag der Anmeldung: 27.07.2005
(73) Patentinhaber: AUDI AG, 85045 Ingolstadt (DE)
(72) Erfinder: Barnreiter, Karl, 85122 Hitzhofen (DE)
(74) Vertreter: Asch, Konrad

(56) Entgegenhaltungen:
- DE-A1- 10 057 204
- DE-A1- 10 115 354
- DE-A1- 19 722 496
- DE-A1- 19 925 563
- FR-A- 2 643 124
- US-A- 4 572 018
- US-A- 4 614 129
- US-A- 5 802 916

## Beschreibung

Die Erfindung betrifft eine Schaltvorrichtung für Geschwindigkeits-Wechselgetriebe in Kraftfahrzeugen.

Eine derartige Schaltvorrichtung zeigt beispielsweise die DE 37 35 090 A1, bei der zwei Schaltstangen zum Schalten von vier Vorwärtsgängen und eine Schaltstange zum Schalten eines Rückwärtsganges in einer Querwand des Getriebegehäuses verschiebbar geführt sind.

Die US 5,802,916, die alle Merkmale des Oberbegriffes des unabhängigen Anspruchs 1 offenbart, und die DE 101 15 354 A1 zeigen einen Schaltstangenhalter mit Lageraufnahmen zum Lagern mehrerer Schaltstangen. Der Schaltstangenhalter ist über Befestigungsmittel an einem Getriebegehäuse befestigbar. Die Lager für die Schaltstangen sind als kreisrunde Durchbrüche ausgebildet und zur Aufnahme von im Querschnitt nicht kreisförmigen Schaltstangen vorbereitet.

Aufgabe der Erfindung ist es, eine Schaltvorrichtung vorzuschlagen, die hinsichtlich des Bauaufwandes und der Montage in das Getriebegehäuse einfacher und an konstruktive Gegebenheiten besser anpassbar ist.

Diese Aufgabe wird mit den Merkmalen des Patentanspruches 1 gelöst. Vorteilhafte Weiterbildungen der Erfindung sind den weiteren Patentansprüchen entnehmbar.

Es wird vorgeschlagen, dass mehrere Schaltstangen nahe der Vorwähl- und Schalteinrichtung in einem gemeinsamen, lösbar am Gehäuse befestigten Lagerträger mit je Schaltstange einer Lageraufnahme gelagert sind. Die Bereitstellung eines separaten Lagerträgers vereinfacht die Gehäusekonstruktion des Wechselgetriebes und ermöglicht mehr konstruktive Freiheitsgrade in der Gestaltung und Anordnung der Schaltstangen und des Lagerträgers. Ferner kann ggf. eine Vormontage von Lagerträger und Schaltstangen außerhalb des Getriebegehäuses des Wechselgetriebes erfolgen.

Der Lagerträger kann bevorzugt durch eine Befestigungsplatte und mehrere Lagerhülsen für die Lagerung der Schaltstangen gebildet und an geeigneten Stellen mit dem Getriebegehäuse verschraubt sein.

Dabei kann der Lagerträger als Verbundteil aus Stahlblech gefertigt sein, wobei die Befestigungsplatte ein Stanzteil und die Lagerhülsen durch Rohrabschnitte gebildet sein können, die anschließend z. B. durch Schweißen zu einem kostengünstigen Verbundteil gefügt sind.

Alternativ kann der Lagerträger als Sintermetallteil hergestellt sein, wodurch ebenfalls eine kostengünstige und verschleißfeste Konstruktion gegeben ist.

Besonders vorteilhaft kann zumindest eine der Schaltstangen aus Stahlblech mit nicht kreisförmigem Profil (z.B. im Querschnitt gesehen rechteckförmig und/oder L-förmig) gefertigt und im Lagerträger wälzgelagert sein. Dies ermöglicht gegenüber zylindrischen Schaltstangen eine leichtere und dreidimensional an Bauraumverhältnisse im Wechselgetriebe besser anpassbare Konstruktion der Schaltvorrichtung, bei verbesserter Leichtgängigkeit der Schaltstangen und damit verbundener Schaltpräzision.

Dazu weist zumindest eine kreisförmige Lageraufnahme im Lagerträger für eine schienenförmige (im Querschnitt gesehen rechteckförmige) Schaltstange eine radiale Erweiterung für den Durchtritt der über die Lageraufnahme hinaus verbreiterten Schaltstange auf. Dies ermöglicht bei räumlich eng aneinander liegenden Lageraufnahmen für mehrere Schaltstangen einen zusätzlichen Freiheitsgrad für die Auslegung der Schaltstange und ermöglicht deren Durchführung durch die Lageraufnahme bei der Montage. Ferner können die Lageraufnahmen an sich vorteilhaft vereinheitlicht werden.

Vorteilhaft kann zumindest eine kreisförmige Lageraufnahme radial nach außen offen ausgebildet sein, wobei die als Öffnung ausgebildete radiale Erweiterung größer als die Dicke der Schaltstange ausgeführt ist. Dadurch können die Abmessungen der Schaltstange zumindest in einer Dimension größer als die Lageraufnahme ausgeführt sein; ferner kann die Schaltstange ohne Hindurchführung durch die Lageraufnahme des Lagerträgers in die Lageraufnahme eingesetzt werden.

In vorteilhafter Weise können mehrere Schaltstangen schienenförmig aus Stahlblech gefertigt und im Lagerträger einander benachbart angeordnet sein, wobei zumindest eine Lageraufnahme mit einer radialen Erweiterung versehen und zumindest eine weitere Lageraufnahme radial nach außen offen ausgebildet ist. Dies ermöglicht z. B. für ein Sechsgang-Wechselgetriebe mit einem Rückwärtsgang die Anordnung von allen vier Schaltstangen im Lagerträger auf engstem Bauraum und unter Berücksichtigung vorgegebener konstruktiver Verhältnisse.

Dabei können als vorteilhafte Anordnung zwei schienenförmige Schaltstangen im wesentlichen übereinander im Lagerträger angeordnet sein, wobei die Öffnung der einen Lageraufnahme und die Erweiterung der anderen Lageraufnahme voneinander abgewandt ausgerichtet sind. Damit gelingt es, die betreffenden Lageraufnahmen trotz größerer und konstruktiv steiferer Ausbildung der Schaltstangen einander unmittelbar benachbart anzuordnen.

Schließlich können die schienenförmigen Schaltstangen über Linearlager in den kreisförmigen Lageraufnahmen des Lagerträgers gelagert sein, wobei die Kugeln der Linearlager in Kugelkäfigen geführt sind, die in die Lageraufnahmen einsetzbar sind.

Ein Ausführungsbeispiel der Erfindung ist im folgenden mit weiteren Einzelheiten näher erläutert. Die schematische Zeichnung zeigt in:
- **Fig**.: **1** einen teilweisen Längsschnitt durch ein Geschwindigkeits-Wechselgetriebe für Kraftfahrzeuge, mit einer Schaltvorrichtung mit einem separaten Lagerträger für vier Schaltstangen;
- **Fig. 2**: einen Schnitt gemäß Linie II - II der Fig. 1 durch die Schaltstangen mit Ansicht der Lageraufnahmen des Lagerträgers; und
- **Fig. 3**: einen Schnitt entlang der Linie III - III der Fig. 2 durch den Lagerträger mit teilweiser Ansicht der Schaltstangen und der Vorwähl- und Schalteinrichtung des Wechselgetriebes.

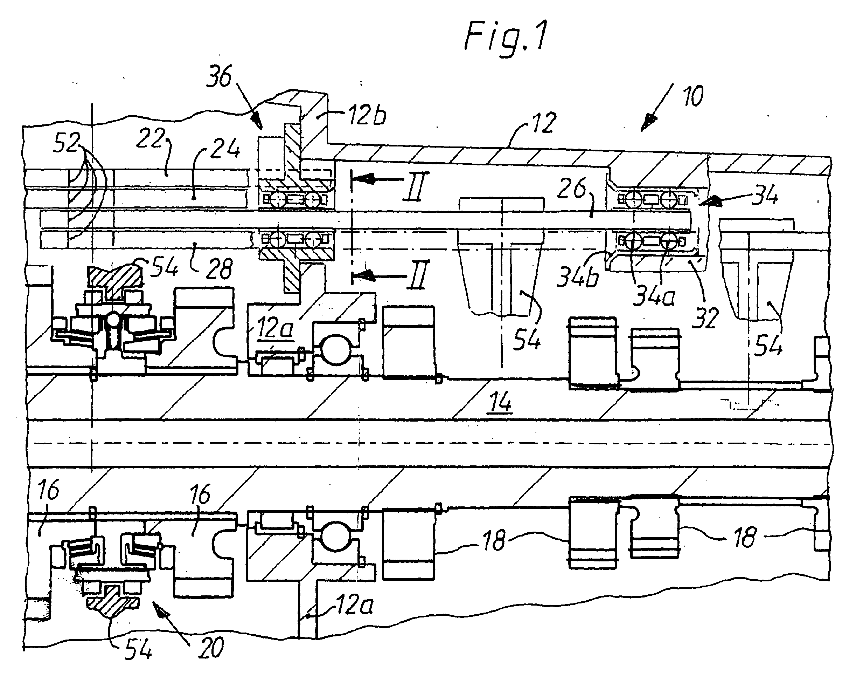

In der **Fig. 1** ist mit 10 ein Geschwindigkeits-Wechselgetriebe (bzw. Schaltgetriebe) für Kraftfahrzeuge teilweise dargestellt, das für sechs Vorwärtsgänge und einen Rückwärtsgang konzipiert ist. Soweit nicht dargestellt kann das Wechselgetriebe 10 bekannter Bauart sein.

Im Gehäuse 12 des Wechselgetriebes 10 sind Wellen 14 (es ist nur eine Welle 14 ersichtlich) drehbar gelagert, die allgemein mit 16 bezeichnete und miteinander kämmende Schaltzahnräder und Festzahnräder 18 tragen, wobei die Schaltzahnräder 16 über auf den Wellen 14 angeordnete Zahnkupplungen 20 zum Herstellen von Übersetzungs- bzw. Gangstufen entsprechend kuppelbar sind.

Zum Betätigen der Zahnkupplungen 20 (z.B. Synchronkupplungen) ist eine Schaltvorrichtung vorgesehen, die sich im wesentlichen aus vier Schaltstangen 22, 24, 26, 28 und einer noch zu beschreibenden Vorwähl- und Schalteinrichtung 30 sowie Mitnehmermittel 54 zusammensetzt.

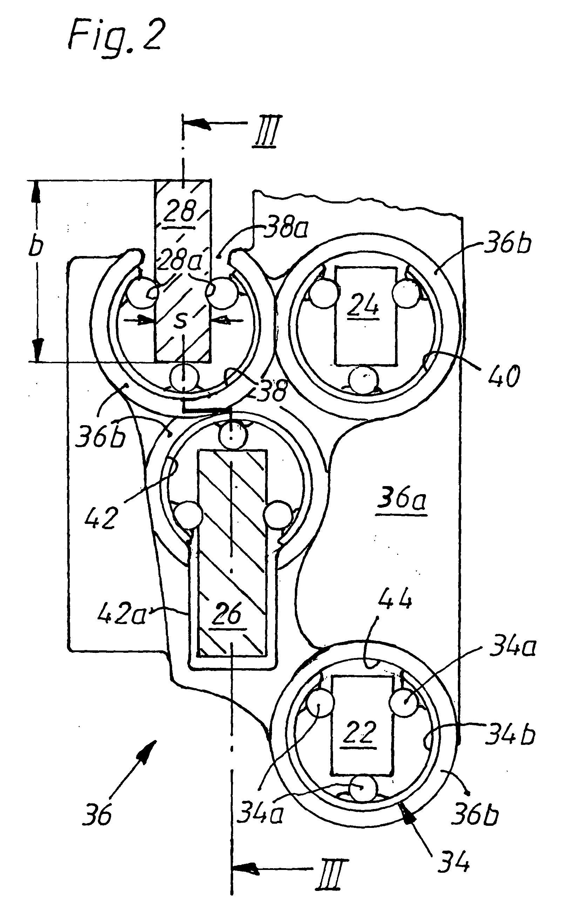

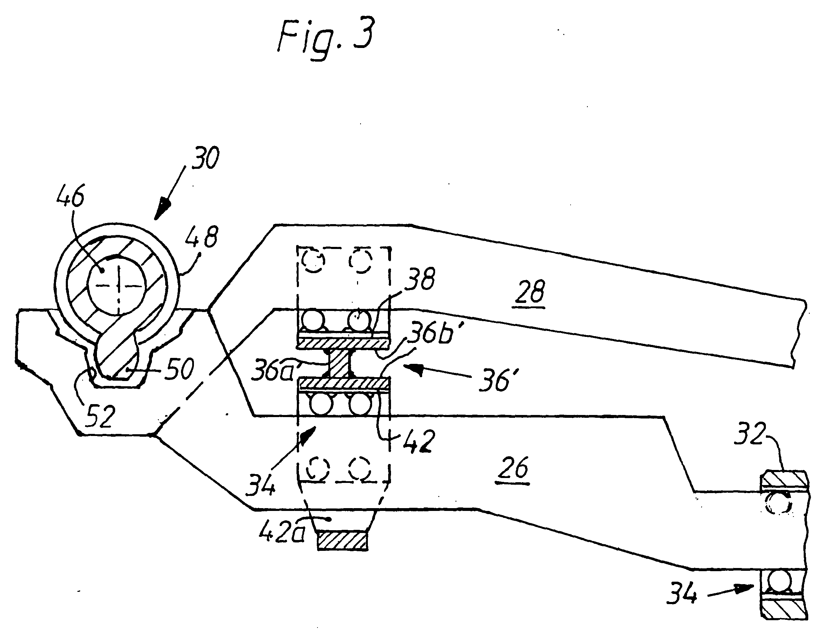

Die Schaltstangen 22 bis 28 sind schienenförmig mit im Querschnitt gesehen einem Rechteck Profil aus Stahlblech ausgeführt (vgl. insbesondere **Fig. 2**). Sie sind am einen Ende (vgl. z.B. Schaltstange 26 der **Fig. 1** oder Schaltstangen 26, 28 der **Fig. 3**) in Lageraufnahmen 32 des Getriebegehäuses 12 in Linearlagern 34 mit einem jeweils die Wälzelemente bzw. Kugeln 34a führenden Kugelkäfig 34b verschiebbar gelagert. Die Linearlager 34 sind jeweils in die entsprechenden kreisförmigen Bohrungen der Lageraufnahmen 32 eingesetzt (vgl. insbesondere **Fig. 1**). Zur Verbesserung der Biegesteifigkeit der Schaltstangen 22 bis 28 können diese zwischen deren Lageraufnahmen teilweise auch ein L-förmiges Querschnittsprofil aufweisen.

Die entsprechenden gehäuseseitigen Lageraufnahmen 32, 34 der Schaltstangen 22, 24 sind auf der Zeichnung nicht ersichtlich, sie sind aber analog den beschriebenen Lageraufnahmen 32, 34 ausgeführt.

Ferner sind die Schaltstangen 22 bis 28 nahe der noch zu beschreibenden Vorwähl- und Schalteinrichtung 30 in einem Lagerträger 36 verschiebbar gelagert, wobei der sich aus einer Befestigungsplatte 36a und Lagerhülsen 36b zusammensetzende Lagerträger 36 über nicht dargestellte Befestigungsschrauben an einer Querwand 12a und an einem gestuften Wandabschnitt 12b des Getriebegehäuses 12 angeschraubt ist.

Der Lagerträger 36 (**Fig. 1**) ist als Sintermetallteil separat gefertigt und nach Vormontage der Schaltstangen 22 bis 28 in das Getriebegehäuse 12 eingebaut. Der Lagerträger 36' (**Fig. 3**) kann auch als Verbundteil aus Stahlblech mit einer gestanzten Befestigungsplatte 36a' und rohrförmigen Lagerhülsen 36b' ausgeführt sein, die miteinander stoffschlüssig, bevorzugt durch Schweißen, fest verbunden sind.

Die Schaltstangen 22 bis 28 (**Fig. 2**) sind in dem Lagerträger 36 bzw. in den Lagerhülsen 36b in entsprechend kreisförmig eingearbeiteten Lageraufnahmen 38, 40, 42, 44 über in die Lageraufnahmen eingesetzte Linearlager 34 mit Wälzelementen bzw. Kugeln 34a und Kugelkäfigen 34b (analog den vorbeschriebenen Linearlagern 34) verschiebbar gelagert.

Dabei sind die beiden Schaltstangen 28, 24 nebeneinander und die Schaltstangen 26, 22 im wesentlichen darunter liegend angeordnet.

Ferner weist die Lageraufnahme 38 bzw. die entsprechende Lagerhülse 36b für die Schaltstange 28 und auch der Kugelkäfig 34b eine nach oben weisende Öffnung 38a auf, in die die in ihrer Breite b größere Schaltstange 28 einsetzbar und die Lageraufnahme 38 nach oben überragend geführt ist. Die Kugeln 34a des nachträglich einschiebbaren Linearlagers 34 sind dabei mit entsprechend eingeformten Kugelbahnen 28a der Schaltstange 28 in Eingriff. Es versteht sich, dass die besagte Öffnung 38a weiter als die Dicke s der Schaltstange 28 ausgeführt sein muss.

Des weiteren ist die Lageraufnahme 42 der darunter liegenden Schaltstange 26 mit einer radial verlaufenden Ausnehmung 42a versehen, mittels der die ebenfalls breiter als die kreisförmige Lageraufnahme 42 hergestellte Schaltstange 26 bei der Montage problemlos einführbar und in der Lageraufnahme 42 mit entsprechendem Freigang geführt ist.

Die Erweiterung 42a ist entgegengesetzt zur Öffnung 38a ausgeführt, so dass die beiden Schaltstangen 28, 26 wie aus der Zeichnung **Fig. 2** ersichtlich nahe aneinander gelagert sein können. Ferner können unabhängig von der Breite b der Schaltstangen 22 bis 28 (abhängig von deren geometrischer Ausbildung und Belastung auf Biegung) gleiche Linearlager 34 verwendet werden.

Im übrigen sind die Lageraufnahmen 38 bis 44 mit deren Wälzlagerungen bzw. Linearlagern 34 wie vorbeschrieben ausgeführt und zur Vermeidung von Wiederholungen nicht weiter erläutert.

Die besagte Vorwähl- und Schalteinrichtung 30 (**Fig.3**) zur Betätigung der Schaltstangen 22 bis 28 setzt sich im wesentlichen aus einer im Getriebegehäuse 12 quer zu den Schaltstangen 22 bis 28 drehbar und verschiebbar gelagerten Schaltwelle 46, einem eine Sperrfunktion ausübenden Nabenteil 48 und einem radial davon abragenden Schaltfinger 50 zusammen.

Der Schaltfinger 50 und das Nabenteil 48 ragen in gleich ausgeführte und aus der **Fig. 3** ersichtliche Ausnehmungen 52 der Schaltstangen 22 bis 28 ein.

Durch Verschieben der Schaltwelle 46 in axialer Richtung kann somit in bekannter Weise eine Schaltstange 22 bis 28 vorgewählt und durch Verdrehen der Schaltwelle 46 in der einen oder der anderen Richtung die vorgewählte Schaltstange 22 bis 28 mittels des Schaltfingers 50 nach links oder rechts verschoben werden. Die jeweils anderen Schaltstangen 22 bis 28 sind über das Nabenteil 48 gegen Verschieben gesperrt.

Durch das Verschieben der jeweiligen Schaltstangen 22 bis 28 werden über an den Schaltstangen 22 bis 28 befestigte Mitnehmermitteln, insbesondere in Schiebemuffen der Zahnkupplungen 20 eingreifende Schaltgabeln 54 (vgl**. Fig. 1**, nur teilweise dargestellt) die entsprechenden Übersetzungsstufen bzw. Gänge geschaltet.

Die Erfindung ist nicht auf das dargestellte Ausführungsbeispiel beschränkt. Ggf. können nicht alle Schaltstangen 22 bis 28 in dem Lagerträger 36 gelagert sein, sondern beispielsweise nur zwei oder drei Schaltstangen.

## Patentansprüche

1. Schaltvorrichtung für Geschwindigkeits-Wechselgetriebe in Kraftfahrzeugen, mit in einem Gehäuse des Wechselgetriebes verschiebbar gelagerten Schaltstangen, mittels denen über eine Vorwähl- und Schalteinrichtung und mit Zahnkupplungen in Eingriff befindliche Mitnehmermittel Gangstufen schaltbar sind, wobei mehrere schienenförmige Schaltstangen mit nicht kreisförmigem Profil (22, 24, 26, 28) nahe der Vorwähl- und Schalteinrichtung (30) in einem gemeinsamen, lösbar am Getriebegehäuse (12) befestigten Lagerträger (36) mit je Schaltstange (22 bis 28) einer im Wesentlichen kreisförmigen Lageraufnahme (38, 40, 42, 44) gelagert sind, **dadurch gekennzeichnet, dass** Lageraufnahme (38, 40, 42, 44) mit einem Linearlager (34) mit Wälzelementen zur Lagerung der jeweiligen Schaltstangen (22 bis 28) versehen ist, und dass zumindest eine Lageraufnahme (38 bis 44) für eine schienenförmige Schaltstange (22 bis 28) eine radiale Erweiterung (42a) für den Durchtritt der über die Lageraufnahme (42) hinaus verbreiterten Schaltstange (26) aufweist.

2. Schaltvorrichtung nach Anspruch 1, **dadurch gekennzeichnet, dass** der Lagerträger (36) durch eine Befestigungsplatte (36a) und mehrere Lagerhülsen (36b) für die Lagerung der Schaltstangen (22 bis 28) gebildet ist.

3. Schaltvorrichtung nach Anspruch 1 oder 2, **dadurch gekennzeichnet, dass** der Lagerträger (36') als Verbundteil aus Stahlblech gefertigt ist.

4. Schaltvorrichtung nach Anspruch 1 oder 2, **dadurch gekennzeichnet, dass** der Lagerträger (36) als Sintermetallteil hergestellt ist.

5. Schaltvorrichtung nach einem der vorhergehenden Ansprüche, **dadurch gekennzeichnet, dass** zumindest eine der Schaltstangen (22 bis 28) mit nicht kreisförmigem Profil aus Stahlblech gefertigt und im Lagerträger (36) wälzgelagert ist.

6. Schaltvorrichtung nach Anspruch 1, **dadurch gekennzeichnet, dass** die radiale Erweiterung der zumindest einen kreisförmigen Lageraufnahme (38) radial nach außen offen ausgebildet ist, wobei die Öffnung (38a) der radialen Erweiterung größer als die Dicke s der Schaltstange (28) ausgeführt ist.

7. Schaltvorrichtung nach einem der vorhergehenden Ansprüche, **dadurch gekennzeichnet, dass** mehrere Schaltstangen (22 bis 28) schienenförmig aus Stahlblech gefertigt und im Lagerträger (36) einander benachbart angeordnet sind und dass zumindest zwei Lageraufnahmen (42) mit einer radialen Erweiterung (42a) versehen sind und zumindest eine radiale Erweiterung der Lageraufnahme (38) radial nach außen offen ausgebildet ist.

8. Schaltvorrichtung nach Anspruch 7, **dadurch gekennzeichnet, dass** zwei schienenförmige Schaltstangen (26, 28) im Wesentlichen übereinander im Lagerträger (36) angeordnet sind und dass die Öffnung (38a) der radialen Erweiterung der einen Lageraufnahme (38) und die Erweiterung (42a) der anderen Lageraufnahme (42) voneinander abgewandt ausgerichtet sind.

9. Schaltvorrichtung nach einem oder mehreren der vorhergehenden Ansprüche, **dadurch gekennzeichnet, dass** die Linearlager (34) Kugeln als Wälzelemente aufweisen, wobei die Kugeln (34a) der Linearlager (34) in Kugelkäfigen (34b) geführt sind, die in die Lageraufnahmen (38 bis 44) einsetzbar sind.

## Claims

1. Gear-shifting mechanism for change-speed gearboxes in motor vehicles, with gear-shift bars which are displaceably mounted in a casing of the gearbox and by means of which gears are engageable via a pre-selection and shift device and clutch means meshing with tooth clutches, wherein a plurality of rail-type gear-shift bars with a non-circular profile (22, 24, 26, 28) are mounted near the pre-selection and shift device (30) in a common bearing carrier (36) removably attached to the gearbox casing (12), with a substantially circular bearing holder (38, 40, 42, 44) for each gear-shift bar (22 to 28), **characterized in that** each bearing holder (38, 40, 42, 44) is provided with a linear bearing (34) with rolling elements for bearing the respective gear-shift bar (22 to 28), and **in that** at least one bearing holder (38 to 44) for a rail-type gear-shift bar (22 to 28) has a radial extension (42a) for passage of the gear-shift bar (26) widened beyond the bearing holder (42).

2. Gear-shifting mechanism according to Claim 1, **characterized in that** the bearing carrier (36) is formed by a mounting plate (36a) and a plurality of bearing sleeves (36b) for bearing the gear-shift bars (22 to 28).

3. Gear-shifting mechanism according to Claim 1 or Claim 2, **characterized in that** the bearing carrier (36') is fabricated from steel plate as a composite part.

4. Gear-shifting mechanism according to Claim 1 or Claim 2, **characterized in that** the bearing carrier (36) is produced as a sintered metal part.

5. Gear-shifting mechanism according to any one of the preceding claims, **characterized in that** at least one of the gear-shift bars (22 to 28) is fabricated with a non-circular profile from steel plate, and is carried in the bearing carrier (36) in a rolling bearing.

6. Gear-shifting mechanism according to Claim 1, **characterized in that** the radial extension of the at least one circular bearing holder (38) is open radially outwards, the opening (38a) of the radial extension being made greater than the thickness s of the gear-shift bar (28).

7. Gear-shifting mechanism according to any one of the preceding claims, **characterized in that** a plurality of gear-shift bars (22 to 28) are fabricated in the form of rails out of steel plate and arranged adjacent to each other in the bearing carrier (36) and **in that** at least two bearing holders (42) are provided with a radial extension (42a) and at least one radial extension of a bearing holder (38) is open radially outwards.

8. Gear-shifting mechanism according to Claim 7, **characterized in that** two rail-type gear-shift bars (26, 28) are arranged substantially one above the other in the bearing carrier (36) and **in that** the opening (38a) of the radial extension of one bearing holder (38) and the extension (42a) of the other bearing holder (42) are orientated in opposite directions.

9. Gear-shifting mechanism according to one or more of the preceding claims, **characterized in that** the linear bearings (34) have balls as rolling elements, the balls (34a) of the linear bearings (34) being guided in ball cages (34b) which are insertable into the bearing holders (38 to 44).

## Revendications

1. Dispositif de changement de vitesses pour une boîte de changement de vitesses dans des véhicules automobiles avec des tringles de changement de vitesses montées coulissantes dans un carter de la boîte de changement de vitesses au moyen desquelles des étages de boîte de vitesses peuvent être changées via un système de présélection et de changement de vitesses et des moyens d'entraînement se trouvant en prise avec des accouplements à dents, plusieurs tringles de changement de vitesses en forme de rail étant montées à proximité du système de présélection et de changement de vitesses (30) dans un support de palier (36) commun fixé amovible sur le carter de la boîte de vitesse (12) avec les tringles de changement de vitesses (22 à 28) chacune dans un logement de palier essentiellement circulaire (38, 40, 42, 44), **caractérisé en ce que** chaque logement de palier (38, 40, 42, 44) est pourvu d'un palier linéaire (34) avec des éléments de roulement pour le logement des tringles de changement de vitesses respectives (22 à 28), et **en ce qu'**au moins un logement de palier (38 à 44) pour une tringle de changement de vitesses en forme de rail (22 à 28) présente une extension radiale (42a) pour le passage de la tringle de changement de vitesses (26) s'étendant au-delà du logement de palier (42).

2. Dispositif de changement de vitesses selon la revendication 1, **caractérisé en ce que** le support de palier (36) est formé par une plaque de fixation (36a) et plusieurs douilles de palier (36b) pour le logement des tringles de changement de vitesses (22 à 28).

3. Dispositif de changement de vitesses selon la revendication 1 ou 2, **caractérisé en ce que** le support de palier (36') est fabriqué sous forme de pièce composite en tôle d'acier.

4. Dispositif de changement de vitesses selon la revendication 1 ou 2, **caractérisé en ce que** le support de palier (36) est fabriqué en tant que pièce en métal fritté.

5. Dispositif de changement de vitesses selon l'une des précédentes revendications, **caractérisé en ce qu'**au moins l'une des tringles de changement de vitesses (22 à 28) est fabriquée avec un profilé non circulaire en tôle d'acier et est montée sur roulements dans le support de palier (36).

6. Dispositif de changement de vitesses selon la revendication 1, **caractérisé en ce que** l'agrandissement radial d'au moins un logement de palier circulaire (38) est formée radialement ouverte vers l'extérieur, l'ouverture (38a) de l'extension radiale étant plus grande que l'épaisseur s de la tringle de changement de vitesses (28).

7. Dispositif de changement de vitesses selon l'une des précédentes revendications, **caractérisé en ce que** plusieurs tringles de changement de vitesses (22 à 28) sont fabriquées en forme de rail en tôle d'acier et sont disposées adjacentes les unes aux autres dans le support de palier (36) et **en ce qu'**au moins deux logements de palier (42) sont pourvus d'une extension radiale (42a) et **en ce qu'**au moins une extension radiale du logement de palier (38) est formée ouverte radialement vers l'extérieur.

8. Dispositif de changement de vitesses selon la revendication 7, **caractérisé en ce que** deux tringles de changement de vitesses en forme de rails (26, 28) sont essentiellement disposées l'une au dessus de l'autre dans le support de palier (36) et **en ce que** l'ouverture (38a) de l'extension radiale de l'un des logements de palier (38) et l'extension (42a) de l'autre logement de palier (42) sont orientées opposées l'une à l'autre.

9. Dispositif de changement de vitesses selon l'une ou plusieurs des précédentes revendications, **caractérisé en ce que** les paliers linéaires (34) présentent des billes en tant qu'éléments de roulement, les billes (34a) du palier linéaire (34) étant guidées dans des cages à billes (34a) qui sont insérables dans les logements de palier (38 à 44).
